# EUROPÄISCHE PATENTSCHRIFT

(11) **EP 2 191 150 B1**
(45) Veröffentlichungstag und Bekanntmachung des Hinweises auf die Patenterteilung: **20.06.2012**
(21) Anmeldenummer: 08801330.5
(22) Anmeldetag: 16.09.2008
(51) Int. Cl.: F16B 5/02

(54) **VERBINDUNGSANORDNUNG BZW. VERBINDUNGSVERFAHREN, INSBESONDERE MIT ALLSEITIGEM KRAFTSCHLUSS**
CONNECTING ARRANGEMENT AND CONNECTING METHOD, IN PARTICULAR BY WAY OF NON-POSITIVE CONNECTION ON ALL SIDES
DISPOSITIF D'ASSEMBLAGE ET PROCÉDÉ D'ASSEMBLAGE, EN PARTICULIER PAR SERRAGE DE FORCE DE TOUS CÔTÉS

(30) Priorität: 18.09.2007 DE 102007044404
(43) Veröffentlichungstag der Anmeldung: 02.06.2010
(73) Patentinhaber: Nord-Lock AG, 8735 St. Gallenkappel (CH)
(72) Erfinder: SCHNEIDER, Harald, Norbert, CH-8730 Uznach (CH)
(74) Vertreter: Schulze, Mark
(86) Internationale Anmeldenummer: PCT/DE2008/001538
(87) Internationale Veröffentlichungsnummer: WO 2009/036740

(56) Entgegenhaltungen:
- EP-A- 0 984 173
- US-A- 3 974 734

## Beschreibung

Die Erfindung bezieht sich auf eine Verbindungsanordnung mit allseitigem Kraftschluss bzw. auf ein Verbindungsverfahren.

Insbesondere im Schwermaschinenbau sind große Verbindungen erforderlich, welche zuverlässig gespannt und auch wieder gelöst werden können müssen. Speziell bei auf Scherung belasteten Verbindungen werden verschraubte formschlüssige Verbindungselemente eingesetzt. Diese Verbindungselemente lassen sich aber wegen ihrer Größe nur schwer spannen und lösen.

Allgemein besteht bei formschlüssigen Verbindungselementen, welche zwei zu verbindende Komponenten miteinander verspannen, ein erheblicher Fertigungsaufwand. Bohrungen in den zu verbindenden Komponenten müssen mit einer sehr großen Genauigkeit und einer hohen Oberflächengüte hergestellt werden. Bei der eigentlichen Montage müssen die zu verbindenden Komponenten fluchtend ausgerichtet werden, was wegen der formschlüssigen Verbindungselemente oft nur durch eine wiederholte mechanische Bearbeitung der Bohrungen vor Ort erreicht werden kann. Außerdem sind unhandliche und teure Werkzeuge für das Anziehen und Lösen von Schrauben und Muttern bei großen Verbindungselementen erforderlich. Die Verwendung eines Schlagschlüssels erfolgt ohne Kontrolle und ist sehr unfallträchtig. Der Einsatz eines Drehmomentübersetzers bedingt sehr hohe Reibung und ist ungenau. Der Einsatz hydraulischer Werkzeuge bedingt einen hohen Platzbedarf und eine nur geringe Ausnutzung der Werkstoffe.

Ein weiterer Nachteil formschlüssiger Verbindungselemente besteht darin, dass diese bei einer Instandhaltung bzw. Wartung problematisch sind, weil spezielle Werkzeuge und Verfahren erforderlich sind, um sie wieder zu lösen. Oftmals müssen die Verbindungselemente sogar zerstört werden, beispielsweise abgetrennt werden, um sie zu entfernen, was meist nur mit kostspieligen und zeitraubenden Improvisationen möglich ist.

Allgemein bekannt ist als Passbolzen eine Verbindungsanordnung zum Verbinden zumindest einer ersten und einer zweiten miteinander zu verbindenden Komponente, wobei in beiden Komponenten eine Durchgangsöffnung ausgebildet ist, durch welche ein Bolzen mit gleichem Durchmesser ragt. Dabei ist der Bolzen lagefest zu der ersten Komponente angeordnet und weist an seinem von der ersten Komponente abgewandten Ende ein Gewinde auf. Mittels einer Mutter, welche auf dem Gewinde aufgeschraubt ist, werden die beiden Komponenten axial miteinander verbunden.

Weiterhin für sich genommen bekannt ist als Spreizbolzen der Einsatz eines Kegelpaars, welches zum radialen Verspannen an oder auf einem Bolzen durch zwei Komponenten angeordnet ist.

Ebenfalls für sich genommen als Scherbüchse bekannt ist das Ausbilden eines Schlitzes in hülsenförmigen Verbindungselementen, um unabhängig von Fertigungstoleranzen der Bohrung einen Formschluss herzustellen.

Weiterhin allgemein bekannt sind Klemmmuttern, welche auf einem Gewinde eines Bolzens in eine bestimmte Anschlagposition gebracht werden können, um eine Drehung des Bolzens über die Anschlagposition hinaus zu verhindern. Bekannt ist als Passstift ein formschlüssiges Verbindungselement, das Querkräfte in einer Teilfuge übertragen kann. Axiale Vorspannkräfte sind dabei nicht möglich.

Als Gelenkzapfen bekannt ist ein formschlüssiges und je nach Bauart auch allseitig kraftschlüssiges Verbindungselement, das zwei Komponenten gelenkig, d.h. um eine Achse des Gelenkzapfens drehbar verbindet. Sowohl ein radialer als auch ein axialer Kraftschluss wirken nur auf eine der beiden Komponenten, d.h. der Gelenkzapfen wird unbeweglich mit einer der beiden Komponenten verbunden. Die andere Komponente ist nur formschlüssig mit dem Gelenkzapfen verbunden und kann sich daher um die Gelenkachse drehen.

Als Welle-Nabe-Verbindung ist ein formschlüssiges Spannelement bekannt, das mittels eines Kegelpaars ebenfalls einen radialen Kraftschluss erzeugt. Allerdings ist ein Hub weder einstellbar noch begrenzt.

EP 0 633 404 A1 beschreibt eine Verbindungsanordnung zum Verbinden zweier Komponenten unter Belassung eines Abstandes zwischen den beiden zu verbindenden Komponenten. In die erste der Komponenten führt eine Bohrung, welche zur Aufnahme eines Kegelpaares mit einem Innenkegel und einem Außenkegel ausgebildet ist. Von der offenen Seite der Bohrung aus führt der Innenkegel mit sich innenseitig erweiterndem Durchmesser in die Bohrung hinein. Der Außenkegel ist in den Innenkegel geführt. Der Innenkegel weist als hülsenförmige Komponente eine Durchgangsbohrung mit einem Innengewinde auf, in welches ein Schraubbolzen in Form einer Schraube mit einem Kopf als Spannschraube eingeschraubt ist, wobei die Schraube durch eine Durchgangsöffnung der zweiten Komponente geführt ist. Mit ihrer der ersten Komponente zugewandten Stirnseite liegt die zweite Komponente an einer Außenfläche des hülsenförmigen Innenkegels an, wobei der Innenkegel so weit aus der Bohrung herausragt, dass ein definierter Abstand zwischen den beiden Komponenten verbleibt. Durch Verspannen der Spannschraube wird der Innenkegel in Richtung der zweiten Komponente verstellt und verspannt dabei den in Längsrichtung geschlitzten Außenkegel gegen eine Bohrungswandung der Bohrung. Dadurch wird das Kegelpaar fest in der Bohrung in der ersten Komponente verspannt und die zweite Komponente über die Verspannungsanordnung beabstandet an der ersten Komponente befestigt. Diese Anordnung dient somit zum Positionieren und Fixieren von zueinander beabstandeten Anlagenteilen im Raum mit Hilfe eines Spreizbolzens. Das Anlagenteil wird dabei vom Befestigungselement ausschließlich durch Reibung axial festgelegt. Damit ist es keine Verschraubung, sondern lediglich eine Klemmvorrichtung.

EP 0 984 173 A2 beschreibt eine dazu ähnlich wirkende Verbindungsanordnung mit einem Montageelement zur Positionierung und Verbindung von zumindest zwei miteinander zu verbindenden Komponenten, wobei das Montageelement mit einem Verbindungselement in Form eines Spannbolzens zusammenwirkt, welcher die Bauteile in Montageöffnungen axial durchdringt und in das Montageelement eindringt. Das Montageelement ist mit seiner Außenabmessung derart auf die zu verbindenden Bauteile abgestimmt, dass es Montageöffnungen aller Bauteile ausgenommen der ersten zu verbindenden Komponente durchdringt. Das Montageelement besteht aus einer hinteren Hülse und einer vorderen Hülse als Innenkegel bzw. Außenkegel, welche entlang einer Gleitfläche mit axialer Steigung lose ineinander eingreifen. Die Gleitfläche ermöglicht eine axiale Verschiebung der beiden Hülsen zueinander. Die axiale Verschiebung der beiden Hülsen durch Verspannen mit der Spannschraube bewirkt eine Erweiterung der Außenabmessung des Montageelements, so dass dieses zumindest in der zweiten Komponente verspannt wird. Damit ist es keine Verschraubung, sondern lediglich eine Klemmvorrichtung.

EP 0 984 173 A2 betrifft somit eine Verbindungsanordnung zum Verbinden zumindest einer ersten und einer zweiten miteinander zu verbindenden Komponente, aufweisend eine Durchgangsöffnung in der zweiten Komponente, einen als Spannschraube ausgebildeten Bolzen, welcher lagefest zu der ersten Komponente durch eine Öffnung der ersten Komponente führend durch die Durchgangsöffnung in der zweiten Komponente führt und an welchem ein Gewinde ausgebildet ist, eine Spannmutter, welche zum Verspannen der Komponenten auf dem von der ersten Komponente beabstandet am Bolzen ausgebildeten Gewinde aufgeschraubt ist, wobei das Gewinde der Spannschraube in Richtung der ersten Komponente an der oder hinter der ersten Komponente zum Verspannen der Komponenten verschraubt ist, und ein Kegelpaar, das einen Innenkegel mit einem Schlitz zum Ermöglichen eines Aufspreizens des Innenkegels und einen Außenkegel aufweist, wobei der Innenkegel als ein konisches Zwischenspannelement, welches durch den Schlitz aufspreizbar zum radialen Verspannen ist, einem den Außenkegel tragenden konischen Spannelement zwischen dem Bolzen und einer der Komponenten zumindest teilweise gegenüberliegend angeordnet ist.

US 4,978,264 A beschreibt zwei miteinander zu verbindende Komponenten, insbesondere Bleche, wobei zum Verbinden eine Verspannungsanordnung verwendet wird. Diese besteht aus einem mittleren Spannelement mit einer sich konisch verjüngenden und dann erweiternden Durchgangsöffnung, in welche von beiden Seiten zwei weitere Spannelemente eingesetzt sind. Diese weisen ebenfalls konische Seitenflächen auf, welche parallel zu den konisch verjüngenden bzw. konisch erweiternden Wandungen des mittleren Spannelements verlaufen. Die beiden weiteren Spannelemente sind entsprechend von den beiden gegenüberliegenden Seiten in die Durchgangsöffnung des mittleren Spannelements eingesetzt. Eine Spannschraube führt dabei durch das erste der weiteren Spannelemente mit dem Bolzen durch in ein Schraubgewinde des zweiten der weiteren Spannelemente hinein. Durch ein Verschrauben werden die beiden weiteren Spannelemente aufeinander zu verspannt, wodurch sie das mittlere Spannelement auseinander drücken. Das mittlere Spannelement ist in eine Durchgangsöffnung einer der zu verbindenden Komponenten eingesetzt und wird durch das Verschrauben gegen die Wandung der Durchgangsöffnung in der Komponente gespannt. Die andere der beiden zu verbindenden Komponenten ist zwischen einem Flansch eines der weiteren Spannelemente und einem Flansch des mittleren Spannelements einsetzbar bzw. eingespannt. Damit ist es keine Verschraubung, sondern lediglich eine Klemmvorrichtung.

Die Aufgabe der Erfindung besteht darin, eine Verbindungsanordnung bzw. ein Verbindungsverfahren mit allseitigem Kraftschluss vorzuschlagen, wobei die Vorspannkräfte auf die miteinander zu verspannenden Komponenten in axialer und radialer Richtung unabhängig voneinander eingestellt werden können.

Diese Aufgabe wird durch ein Verbindungsverfahren mit den Merkmalen gemäß Patentanspruch 1 bzw. durch eine Verbindungsanordnung mit den Merkmalen gemäß Patentanspruch 5 gelöst. Vorteilhafte Ausgestaltungen sind Gegenstand von abhängigen Ansprüchen.

Bevorzugt wird demgemäß insbesondere ein Verbindungsverfahren zum Verbinden zumindest einer ersten und einer zweiten miteinander zu verbindenden Komponente insbesondere mit allseitigem Kraftschluss, bei dem ein lagefest von der ersten Komponente abstehender Bolzen durch eine Durchgangsöffnung in der zweiten Komponente geführt wird, an einem Gewinde an dem Bolzen, insbesondere zumindest von der ersten Komponente beabstandeten Gewinde, eine Spannmutter zum Verspannen der Komponenten angeschraubt wird, vor dem Anschrauben der Spannmutter ein konisches Spannelement zwischen den aneinander anliegenden Komponenten und der Spannmutter zum radialen Verspannen an oder auf dem Bolzen in Richtung der ersten Komponente manuell und/oder mit einer definierten Einsetzkraft eingesetzt wird, nach dem Einsetzen des Spannelements eine Klemmmutter am Spannelement angeschraubt wird unter Belassung eines Anschlagabstands größer Null zu der zweiten Komponente und danach die Spannmutter gegen das Spannelement und/oder gegen die Klemmmutter gespannt wird.

Anstelle eines Bolzens mit dem Gewinde und mit der aufgeschraubten Spannmutter kann auch der als eine Schraube mit einem Kopf, also als eine Spannschraube ausgebildete Bolzen mit einem Gewinde des Bolzens in Richtung der ersten Komponente an der oder hinter der ersten Komponente zum Verspannen der Komponenten an- oder eingeschraubt werden. In diesem Fall wird vor dem Einschrauben des als Spannschraube ausgebildeten Bolzens ein konisches Spannelement zwischen den aneinander anliegenden Komponenten und dem Kopf zum radialen Verspannen an oder auf dem Bolzen in Richtung der ersten Komponente eingesetzt. In einem abschließenden Schritt wird dann der Kopf der Spannschraube gegen das konische Spannelement und/oder gegen die Klemmmutter oder gegen eine oder mehrere Klemmschrauben gespannt.

Als weitere gleich wirkende Ausgestaltung kann entsprechend nach dem Einsetzen des Spannelements anstelle der Klemmmutter zumindest eine Klemmschraube als ein Klemmelement am Spannelement angeschraubt werden unter Belassung eines Anschlagabstands größer Null zu der zweiten Komponente.

Äquivalent zu dem Kopf der Spannschraube sind auch sonstige von dem Bolzen bzw. der Spannschraube abstehende Komponenten, welche in axialer Richtung fest mit einem kopfseitigen oder aus der zweiten Komponente herausragenden Ende des Bolzens verbunden sind und in radialer Richtung vom Bolzen bzw. von der Spannschraube abstehen.

Unter dem lagefest von der ersten Komponente abstehenden Bolzen wird dabei auch verstanden, dass der Bolzen aus einer Öffnung in der ersten Komponente herausragt oder durch eine Durchgangsöffnung der ersten Komponente hindurchführt. Der Bolzen ist bevorzugt in seiner axialen Richtung an der ersten Komponente festgelegt oder durch Verschrauben festlegbar.

Vorspannen bedeutet dabei, dass die Anordnung in einen Zustand verspannt wird, bevor sie in den eigentlichen Betrieb genommen wird, in welchem ggfs. weitere Kräfte bzw. Lasten auf die Anordnung einwirken. Ein allseitiger Kraftschluss wird vorteilhaft erreicht, da sowohl ein radialer als auch ein axialer Kraftschluss definiert einstellbar sind.

Durch eine solche Verfahrensweise bzw. eine entsprechende Anordnung der einzelnen Elemente wird ein Aufheben fertigungsbedingter Geometrieabweichungen von einer Soll-Geometrie der Komponenten und Elemente bewirkt. Zugelassen werden können somit größere Fertigungstoleranzen.

Ein solches Verfahren ermöglicht eine Entkopplung von Axial- und Radialbewegung beim Verspannen zweier zu verspannender Komponenten mittels eines Bolzens bzw. eines daran sitzenden konischen Spannelements in radialer Richtung zu dem Bolzen. Eine Kopplung von Axial- und Radialbewegung bleibt trotzdem indirekt über die gegebene Geometrie vorhanden, da abhängig von der Position der Klemmmutter oder Klemmschrauben ein eindeutiges Verhältnis zwischen dem Kegelverhältnis der Oberfläche der konischen Komponente und dem Hub der Spannmutter oder des Spannschrauben-Kopfs bleibt, wenn die Klemmmutter oder Klemmschrauben zu Beginn des Spannvorgangs einen abhängig von einer gewünschten Radialkraft vorbestimmten Anschlagsabstand zu der zweiten Komponente bzw. einem der zweiten Komponente fest zugeordneten Anschlag belässt.

Mit einfachen Mitteln und ohne speziell erforderliche Werkzeuge kann somit eine Verspannung zweier zu verspannender Komponenten mit zugleich radialer und axialer Vorspannkraft ermöglicht werden. Dabei ist keine Beweglichkeit erwünscht, weswegen ein allseitiger Kraftschluss wirkt, so dass der Kraftschluss stets auf beide Komponenten wirkt..

Bevorzugt wird mit der Spannmutter oder mit der Spannschraube das Spannelement bei Reduzierung des Anschlagabstands zu Null unter Aufbau einer sich zwischen den Komponenten bei einer solchen Nullstellung aufbauenden Radialkraft angespannt. Danach wird die Spannmutter oder die Spannschraube gegen das Spannelement und/oder gegen die Klemmmutter wirkend oder gegen die zumindest eine Klemmschraube wirkend nach der Reduzierung des Anschlagabstands zu Null weiter angespannt unter Aufbau einer sich zwischen den Komponenten zunehmend aufbauenden Axialkraft. Insbesondere nimmt dabei in einer ersten Spannphase der Spannmutter die Radialkraft innerhalb der Öffnungen zwischen dem Bolzen und einer Innenwandung der Öffnungen zu. Die Axialkraft nimmt in dieser ersten Phase nur unwesentlich zu. In einer zweiten Spannphase nimmt dann im wesentlichen nur noch die Axialkraft zu. Idealerweise nimmt die Radialkraft in dieser Phase nicht mehr oder relativ zur Zunahme der Axialkraft nur noch weniger als 20%, insbesondere weniger als 10% zu. Trotz dieser Entkopplung sind aber sowohl die Axialkraft als auch die Radialkraft beide für sich eindeutig vorgebbar und beide trotzdem durch das Anziehen nur einer einzigen Spannmutter bzw. des Spannschrauben-Kopfs einstellbar. Während dieser Phasen sind die Komponenten einander berührend und direkt zueinander benachbart angeordnet oder es sind weitere Komponenten zwischengesetzt, wobei auch diese dann entsprechend aneinander anliegen.

Bevorzugt wird dabei der belassene Anschlagabstand größer Null zu der zweiten Komponente abhängig von einem konischen Neigungswinkel des Spannelements und abhängig von der bei der Nullstellung aufzubauenden Radialkraft eingestellt. Zusätzlich oder alternativ dazu kann vorteilhaft der Anschlagabstand eingestellt werden als eine Anzahl von bis zur Nullstellung zu drehenden Windungen des Gewindes und/oder als ein Rotationswinkel der Spannmutter oder der Spannschraube bis zur Nullstellung.

Bevorzugt wird demgemäß außerdem eine Verbindungsanordnung zum Verbinden zumindest einer ersten und einer zweiten miteinander, insbesondere mit allseitigem Kraftschluss miteinander zu verbindenden Komponente. Die Verbindungsanordnung weist dabei auf eine Durchgangsöffnung in der zweiten Komponente, einen Bolzen, welcher lagefest zu der ersten Komponente von der ersten Komponente ausgehend durch die Durchgangsöffnung in der zweiten Komponente führt und an welchem zumindest von der ersten Komponente beabstandet oder abgewandt ein Gewinde ausgebildet ist, eine Spannmutter, welche zum Verspannen der Komponenten auf dem Gewinde aufgeschraubt ist, und ein Kegelpaar, das einen Innenkegel mit einem Schlitz zum Ermöglichen eines Aufspreizens des Innenkegels und einen Außenkegel aufweist. Dabei ist gemäß einer ersten Ausführungsform der Innenkegel als ein konisches Spannelement ausgebildet, welches zum radialen Verspannen auf dem Bolzen zwischen den Komponenten und der Spannmutter angeordnet ist, und der Bolzen trägt den Außenkegel oder bildet den Außenkegel aus. Insbesondere ist der Außenkegel so als eigenständige Komponente oder als Bestandteil des Bolzens ausgestaltet. Gemäß einer zweiten Ausführungsform ist der Innenkegel als ein konisches Zwischenspannelement, welches durch den Schlitz aufspreizbar zum radialen Verspannen ist, einem den Außenkegel tragenden oder ausbildenden konischen Spannelement zumindest teilweise gegenüberliegend und zwischen Bolzen und den Komponenten angeordnet. Bei beiden Ausführungsformen ist eine Klemmmutter mittels eines Klemmmuttergewindes am konischen Spannelement angeschraubt und gegen eine Anschlagfläche der zweiten Komponente spannbar bzw. gespannt, um eine Bewegungsmöglichkeit des Spannelements zu beschränken. Mit anderen Worten trägt bei beiden Ausführungsformen ein verschiebbares Teil des Kegelpaars die Klemmmutter.

Anstelle eines solchen Bolzens mit dem Gewinde, auf welchem die Spannmutter aufschraubbar ist, kann der Bolzen auch als eine Spannschraube mit einem Kopf und mit einem Gewinde ausgebildet sein, wobei dann von der Spannschraube deren Gewinde in Richtung der ersten Komponente an der oder hinter der ersten Komponente zum Verspannen der Komponenten verschraubt ist. Der Innenkegel als ein konisches Spannelement ist dann zum radialen Verspannen auf dem Bolzen bzw. auf dem Schaft der Spannschraube zwischen den aneinander anliegenden Komponenten und dem Kopf angeordnet, wenn der Bolzen den Außenkegel trägt oder ausbildet.

Anstelle einer Klemmmutter oder zusätzlich dazu kann zumindest eine Klemmschraube mittels eines Klemmschraubengewindes als einem Klemmelementgewinde am konischen Spannelement angeschraubt sein und gegen eine Anschlagfläche der zweiten Komponente gespannt eine Bewegungsmöglichkeit des Spannelements beschränken.

Ein allfälliger axialer Kraftschluss muss nicht, sofern bei einer Welle-Nabe-Verbindung überhaupt andenkbar, mit einem zweiten Spannelement erzeugt werden, welches aber nicht zur eigentlichen Welle-Nabe-Verbindung gehören würde. Hingegen wird vorliegend der radiale und axiale Kraftschluss mit dem gleichen Spannelement erzeugt. Jede Ausführungsform hat dabei als gemeinsames Element ein verschiebbares Spannelement mit sowohl einer konischen Fläche als auch der darauf einstellbar angeordneten Klemmmutter oder Klemmschrauben.

Bevorzugt wird insbesondere eine Verbindungsanordnung, bei der eine axiale Spannelement-Vorspannkraft der Klemmmutter oder Klemmschrauben gegen die zweiten Komponente in einem definierten oder definierbaren Verhältnis zu einer Radialkraft in radialer Richtung zum Bolzen bzw. zum Schaft der Spannschraube steht.

Bevorzugt ist im verspannten Zustand das konische Spannelement radial verspannt in einer in der ersten Komponente ausgebildeten Öffnung, wobei der Bolzen bzw. Schaft der Spannschraube durch diese Öffnung in der ersten Komponente führt.

Bevorzugt ist die Öffnung durch die erste zu verspannende Komponente hindurchführt und der Bolzen bzw. die Spannschraube mittels eines auf der zur zweiten Komponente gegenüberliegenden Seite angeordneten Widerlagers gegen die erste Komponente gespannt.

Bevorzugt ist gemäß dazu alternativer Ausgestaltung die Öffnung als Sackloch in der ersten zu verspannenden Komponente ausgebildet und der Bolzen ist mittels seinem zur zweiten Komponente gegenüberliegenden Endabschnitt bzw. die Spannschraube ist mittels ihrem zur zweiten Komponente gegenüberliegenden Endabschnitt in der ersten Komponente fest angeordnet, insbesondere eingeschraubt.

Bevorzugt wird gemäß einer weiteren Variante, wenn der Bolzen bzw. die Spannschraube einen Abschnitt mit einer konischen Oberfläche als einem konischen Gegenspannelement zum konischen Spannelement aufweist.

Bevorzugt wird als eigenständig vorteilhafte Ausgestaltung eine Verbindungsanordnung, welche eine Vielzahl solcher Klemmschrauben aufweist, wobei die Klemmschrauben über einen Umfang des Spannelements verteilt angeordnet sind und durch Gewindebohrungen im Spannelement verstellbar in Richtung der Anschlagfläche der zweiten Komponente ragen. Die Klemmschrauben ermöglichen den Einsatz einer derartigen Verspannungsanordnung vorteilhaft auch auf einer unbearbeiteten, auf einer nur bedingt bearbeiteten sowie auf einer nicht planen Oberfläche der Anschlagfläche. Die Klemmschrauben sind bevorzugt als Madenschraube, aber auch als normale Schraube umsetzbar. Dabei sind die Klemmschrauben bevorzugt über einen Umfang eines Kopfabschnitts des Spannelements verteilt angeordnet, das axial verschoben wird, um den radialen Kraftschluss zu erzeugen.

Eine Unterlegscheibe kann zwischen die Klemmmutter und die Anschlagfläche gesetzt sein oder zwischen die zumindest eine Klemmschraube und die Anschlagfläche gesetzt sein. Die Unterlegscheibe verhindert eine Beschädigung der Oberfläche der Anschlagfläche. Dadurch können auch zweite Komponenten mit einer empfindlichen Oberfläche verspannt werden. Die Unterlegscheibe verteilt den Druck der Stirnflächen der einzelnen Klemmschrauben auf eine größere Fläche.

Das konische Spannelement mit dem Innenkegel weist bevorzugt einen ersten Abschnitt und einen zweiten Abschnitt als zwei voneinander getrennten Komponenten auf, wobei an dem ersten Abschnitt die Klemmmutter bzw. die zumindest eine Klemmschraube angeschraubt ist und wobei der zweite Abschnitt konisch ausgebildet ist und in zumindest die erste Komponente hineinragt. Bei einer solchen Ausgestaltung kann das Spannelement als Set mit verschiedenen Längen der beiden Abschnitte bereitgestellt werden, um eine flexible Anpassung an die jeweiligen Dimensionen der zu verspannenden Komponenten zu ermöglichen. Auch zylindrische oder konische Zwischenstücke können als Verlängerungen bei Bedarf zwischen die beiden Abschnitte gesetzt werden, falls z.B. die Dicke der zweiten Komponente sehr groß ist.

Bevorzugt wird insbesondere die Verwendung einer derartigen Verbindungsanordnung zum Durchführen eines solchen Verfahrens.

Überraschenderweise ist mit nur wenigen Änderungen an bekannten Aufbauformen von Verbindungsanordnungen und einer überraschend einfach modifizierten Verfahrensweise zum Verspannen von zu verspannenden Komponenten eine vorteilhafte Spreizbolzenanordnung entstanden, welche derartige Spreizbolzen als neuartige Verbindungselemente ansehen lässt. Die insbesondere geschlitzte Konushülse als konisches Spannelement bzw. Spannhülse bewirkt neben einem bewährten Formschluss einen zusätzlichen radialen Kraftschluss. Dieser erhöht die Steifigkeit der Verbindung entscheidend und schließt schädliche Mikrobewegungen in einer Teilfuge aus.

Zusätzlich zum radialen Kraftschluss wird mittels der axial wirkenden Klemmmutter oder Klemmschrauben auch ein axialer Kraftschluss erzeugt. Dabei kann das Verhältnis von radialer zu axialer Vorspannkraft innerhalb weiter Grenzen unabhängig voneinander eingestellt werden. Trotzdem genügt zum radialen und zum gleichzeitig axialen Spannen eine einzige Spannschraube bzw. eine einzige Spannmutter, welche auf den Bolzen aufgeschraubt ist, und die kombinierte Anordnung aus dem konischen Spannelement und der darauf geschraubten axialen Klemmmutter oder Klemmschrauben gegen die zu verspannenden Komponenten spannt.

Durch das Ausbilden des Schlitzes in dem konischen Spannelement kann dieses stärker aufgeweitet werden, als dies bei üblicherweise aus linear elastischem Material, wie z. B. Stahl, gefertigten Spannhülsen üblich ist, so dass auch gröbere Fertigungstoleranzen der insbesondere als Bohrung ausgebildeten Öffnungen in den zu verspannenden Komponenten zugelassen werden können. Dies reduziert vorteilhaft auch die Fertigungskosten. Auch die übrigen Komponenten sind aus metallischem Material, wie z. B. Stahl, gefertigt.

Besonders vorteilhaft ist, dass mit einem derart geschlitzten Spannelement in Form einer konischen Spannhülse sehr hohe Radialkräfte erzeugt werden können, welche nicht nur ein radiales Spiel in der Öffnung aufheben, sondern darüber hinaus eine echte radiale Vorspannung bewirken. Dadurch wird quer zur Schrauben- bzw. Bolzenachse ein ähnliches Tragverhalten erreicht, wie es bisher nur längs zur Bolzenachse möglich war. Insbesondere tritt im Betrieb auch kein einseitiges Abheben der konischen Spannhülse von der Öffnung auf, sondern die geschlitzte Spannhülse bleibt vorzugsweise entlang des gesamten Innenumfangs der Öffnung stets in flächigem Kontakt zur Öffnung. Plastische Verformungen werden daher vorteilhaft vermieden. Letztendlich bedingt dies, dass auch ein späteres Lösen der Verschraubung für Wartungsarbeiten ermöglicht wird und dadurch die Komponenten mehrfach verwendet werden können.

Kombiniert wird somit eine Vielzahl verschiedenartiger Aspekte, welche gemäß der vorliegenden Ausführungsformen einheitlich in einer jeweils einzigen Ausführungsform verwirklicht sind. Dies sind ein formschlüssiges Verbindungselement, welches zudem für zwei oder mehr zu verbindende Teile mit mindestens einer gemeinsamen Bohrung mit zugleich allseitigem Kraftschluss und zudem einstellbarer axialer und auch radialer Vorspannung zur Übertragung von Querkräften oder axialen Torsionsmomenten mit überlagerten Axialkräften und Biegemomenten einsetzbar ist.

Dabei wird der Bolzen gemäß einer besonders bevorzugten Ausführungsform direkt als Spreizbolzen in eine gemeinsame Öffnung bzw. Bohrung der zu verbindenden Teile bzw. Komponenten eingesetzt. Zur axialen Befestigung kann er entweder in ein Innengewinde in einem der zu verbindenden Teile eingeschraubt oder anderweitig an dieser entsprechenden Komponente befestigt werden oder gemäß einer alternativen Ausführungsform durch beide zu verbindende Komponenten hindurchgehen und jenseits auf den abgewandten Seiten der zu verbindenden Komponenten mit einer Mutter oder einem Schraubenkopf gehalten werden. Auf einer Seite wird gemäß der ersten Ausführungsform eine Spannmutter auf dem Bolzen aufgeschraubt, welche zum definiert vorgebbaren Zusammenspannen dient.

Als weiterer wesentlicher Aspekt ist der Spreizbolzen bzw. das konische Spannelement formschlüssig, da der Querschnitt der gemeinsamen durch die beiden Komponenten führenden Öffnungen bzw. Bohrungen von der Spannanordnung darin vollständig ausgefüllt wird.

Der radiale Kraftschluss entsteht, indem ein Spannelement auf dem Bolzen aufgeschraubt und angezogen wird, vorliegend die Spannmutter oder die Spannschraube. Diese übt eine axiale Vorspannkraft auf die geschlitzte Hülse mit dem Innenkegel aus, mit der die Hülse auf einen Bolzen oder ein weiteres konisches Spannelement mit Außenkegel geschoben wird. Die Hülse weitet sich auf, bis sie gegen die Innenseite der gemeinsamen Öffnung drückt. Da die Hülse als bevorzugtes Spannelement geschlitzt ausgebildet ist, können sich darin keine tangentialen Spannungen aufbauen, welche die radiale Aufweitung behindern würden. Die insbesondere Hülse als konisches Spannelement übt somit eine radiale Flächenpressung auf die Innenseite der gemeinsamen Öffnungen aus, welche im Kraftgleichgewicht mit der axialen Vorspannkraft der Spannmutter als dem Spannelement steht. Die Verbindung ist somit in radialer Richtung kraftschlüssig vorgespannt.

Als weiterer Aspekt kann die radiale Vorspannung mittels einer axialen Klemmmutter oder Klemmschrauben begrenzt werden, welche je nach Ausführungsform auf die geschlitzte Spannhülse bzw. das geschlitzte Spannelement oder Gegenspannelement aufgeschraubt wird und nachfolgend mittels der Spannmutter oder dem Spannschrauben-Kopf in axialer Richtung geschoben wird, bis die Klemmmutter oder die zumindest eine Klemmschraube an den zu verbindenden Komponenten anliegt. Somit kann sich das konische Spannelement in axialer Richtung nicht mehr bewegen und die radiale Vorspannung kann entsprechend nicht mehr weiter erhöht werden.

Mit der axialen Klemmmutter oder der zumindest einen Klemmschraube kann außerdem das Verhältnis zwischen radialer und axialer Vorspannung gezielt eingestellt werden. Solange die Klemmmutter oder die zumindest eine Klemmschraube nicht an den zu verbindenden Komponenten aufliegt, bewirkt die von der Spannmutter oder dem Kopf der Spannschraube erzeugte axiale Vorspannkraft nur eine radiale Vorspannung der Verbindung. Sobald die Klemmmutter oder die zumindest eine Klemmschraube an den zu verbindenden Komponenten an- bzw. aufliegt, bewirkt jedes weitere Anziehen der Spannmutter oder Spannschraube nur noch eine axiale Vorspannung. Somit wird die von der Spannmutter oder der Spannschraube erzeugte axiale Vorspannkraft erst auf die radiale und dann auf die axiale Vorspannung aufgeteilt.

Durch das Kegelverhältnis des konischen Spannelements bzw. des konischen Zwischenspannelements ist das Verhältnis zwischen axialer Bewegung des konischen Spannelements und die radiale Aufweitung des an der Innenwandung der Öffnungen anliegenden Spannelements bzw. Gegenspannelements aufgrund überraschend einfacher geometrischer Bedingungen eindeutig festgelegt. Solange keine plastischen Verformungen auftreten, ist somit auch das Verhältnis zwischen axialer Vorspannkraft der Spannmutter oder der Klemmschrauben und radialer Vorspannung festgelegt. Somit kann die radiale Vorspannung bzw. Radialkraft und das Verhältnis der axialen Vorspannung bzw. Axialkraft über den Hub des einzuschiebenden Spannelements eingestellt werden.

Vorzugsweise ist gemäß dem weiteren Aspekt die Verbindung radial so hoch vorgespannt, dass die an der Innenseite der gemeinsamen Öffnungen auftretende radiale Flächenpressung im Kraftgleichwicht mit den äußeren Lasten steht. Zum Übertragen von Querkräften ist dabei die radiale Flächenpressung größer als ein mittlerer Loch- bzw. Öffnungs-Leibungsdruck, den die Querkraft auf die in der Öffnung eingesetzten Spannelemente ausübt. Axiale Torsionsmomente werden mittels der zwischen der in der Öffnung eingesetzten Spannhülse bzw. dem Spannelement oder Gegenspannelement und den zu verbindenden Komponenten herrschenden Reibung übertragen.

Zusätzlich auftretende Axialkräfte und Biegemomente werden wie bei einer konventionellen Schraubenverbindung übertragen. Dazu wird die Verbindung axial so hoch vorgespannt, dass die zu verbindenden Komponenten nicht voneinander abheben können.

Ein Ausführungsbeispiel wird nachfolgend anhand der Zeichnung näher erläutert. Für verschiedene Ausführungsformen werden gleiche Bezugszeichen verwendet, soweit die jeweiligen Komponenten oder Funktionen gleich oder vergleichbar ausgebildet bzw. wirkend sind. Insbesondere werden bei weiteren Ausführungsformen vorzugsweise nur von vorherig beschriebenen Ausführungsformen abweichende Komponenten und Funktionen beschrieben. Es zeigen:
- Fig. 1: eine erste Ausführungsform einer Verbindungsanordnung zum Verspannen zweier zu verspannender Komponenten,
- Fig. 2A - C: Schritte eines Verbindungsverfahrens zum Verspannen der Komponenten einer solchen Verbindungsanordnung,
- Fig. 3: eine gegenüber Fig. 1 modifizierte Ausführungsform einer Verbindungsanordnung,
- Fig. 4: eine demgegenüber noch weiter modifizierte Ausführungsform einer Verbindungsanordnung,
- Fig. 5A - F: einen Ablauf zum Verbinden zweier Komponenten der Verbindungsanordnung gemäß Fig. 4,
- Fig. 6: eine weitere modifizierte Ausführungsform mit einer Spannschraube anstelle eines Bolzens und einer Spannmutter sowie einem mehrteiligen Spannelement und
- Fig. 7: eine noch weiter modifizierte Ausführungsform mit Klemmschrauben anstelle einer Klemmmutter.

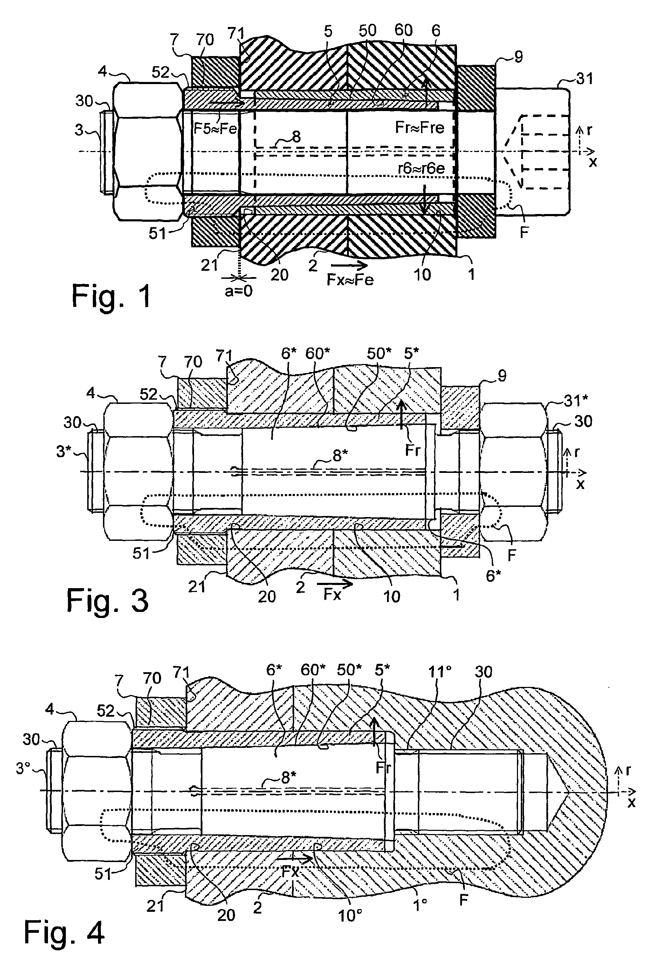

Wie aus Fig. 1 ersichtlich, dient eine Verbindungsanordnung dazu, zumindest eine erste Komponente 1 und eine zweite Komponente 2 miteinander zu verbinden. Prinzipiell können jedoch auch mehr als nur zwei Komponenten miteinander verspannt werden, insbesondere dann, wenn weitere Komponenten mit entsprechenden Durchgangsöffnungen zwischen die erste und die zweite Komponente 1, 2 gelegt sind.

Zum Verspannen der ersten und der zweiten zu verspannenden Komponente 1, 2 dient ein Bolzen 3, welcher durch Öffnungen 10, 20 geführt ist, welche in der ersten bzw. in der zweiten Komponente 1, 2 als Durchgangsöffnungen ausgebildet sind.

Bei der dargestellten Ausführungsform ist der Bolzen 3 als eine Schraube mit einem Schraubenkopf 31 ausgebildet. Üblicherweise, jedoch nicht zwingend notwendig, ist zwischen dem Schraubenkopf 31 und die Oberfläche der ersten Komponente 1, welche die Öffnung 10 umgibt, eine Unterlegscheibe 9 gelegt. Der Schraubenkopf 31 und die Unterlegscheibe 9 bilden somit ein Widerlager aus, welches ein Verspannen dieser Seite des Bolzens 3 gegen die erste Komponente 1 an der Seite der ersten Komponente 1 ermöglicht, welche von der zweiten Komponente 2 abgewandt ist.

Der Bolzen 3 weist an seinem gegenüberliegenden Ende, das heißt an seinem von der ersten Komponente 1 abgewandten bzw. beabstandeten Ende ein Gewinde 30 auf, welches zum Aufschrauben einer Spannmutter 4 dient. Die Spannmutter 4 dient dazu, durch Aufschrauben auf das Gewinde 30 des Bolzens 3 die beiden Komponenten 1, 2 miteinander zu verspannen.

Als wesentliche Komponente der Verbindungsanordnung ist ein konisches Spannelement 5 um den Bolzen 3 herum angeordnet, wobei das konische Spannelement 5 mit seinem der Spannmutter 4 abgewandten Ende zumindest teilweise in den Bereich innerhalb der Öffnung 10 der ersten Komponente 1 hineinragt. Mit ihrem gegenüberliegenden Ende, welches der Spannmutter 4 zugewandt ist, ragt das konische Spannelement 5 aus der Öffnung 20 der zweiten Komponente 2 mit einem Kopfabschnitt 51 heraus. Der Kopfabschnitt 51 des konischen Spannelements 5 weist ein Außengewinde 52 auf, welches zum Aufschrauben einer axialen Klemmmutter 7 ausgebildet ist.

Optional kann die Öffnung 20 in Richtung der Spannmutter 4 auch in eine verbreiterte Öffnung münden, welche breit genug ist, auch die axiale Klemmmutter 7 in einem dann auch innerhalb der zweiten Komponente 2 liegenden derart vor der Öffnung liegenden verbreiterten Öffnungsabschnitt aufzunehmen.

Weiterhin kann abweichend von der Darstellung der Kopfabschnitt 51 auch als nicht im Durchmesser verbreiterter Abschnitt des konischen Spannelements ausgebildet sein, solange er stabil genug ist, über das Außengewinde 52 die axiale Klemmmutter 7 ausreichend fest zu tragen.

Das konische Spannelement 5 weist eine sich in Richtung der ersten Komponente 1 verjüngende konische Oberfläche als einen Außenkegel 50 auf, welche in formschlüssige Verbindung tritt mit einem konischen Zwischenspannelement 6, welches eine sich in Richtung der ersten Komponente 1 innenseitig am Innendurchmesser verjüngende konische Oberfläche als ein Innenkegel 60 aufweist. Somit wird eine Anordnung aus einem Kegelpaar mit einem Außenkegel 50 und einem Innenkegel 60 zwischen dem Bolzen 3 und den beiden Komponenten 1, 2 eingesetzt. In der als konischem Zwischenspannelement 6 mit dem Innenkegel 60 ausgebildeten Spannhülse ist ein Schlitz 8 ausgebildet, welcher von dem der Spannmutter 4 gegenüberliegenden, abgewandten Ende, das heißt von der dem Schraubenkopf 31 zugewandten Ende, achsparallel zur Achse des Bolzens 3 durch das Zwischenspannelement 6 führt. Dadurch ist insbesondere ein dem Schraubenkopf 31 zugewandter Abschnitt des Zwischenspannelements 6 durch das konische Spannelement 5 aufweitbar, wenn das konische Spannelement 5 in das konische Zwischenspannelement 6 zunehmend weiter eingespannt wird.

Eine der Klemmmutter 7 zugewandte Oberfläche der zweiten Komponente 2 ist als ein Anschlag 71 für die als Gegenanschlag dienende Oberfläche 21 der axialen Klemmmutter 7 ausgebildet. Alternativ kann auch eine sonstige Komponente als Anschlag ausgebildet sein, solange eine feste und in axialer Richtung starre Verbindung zu der zweiten Komponente 2 führt, welche axiale Kräfte überträgt.

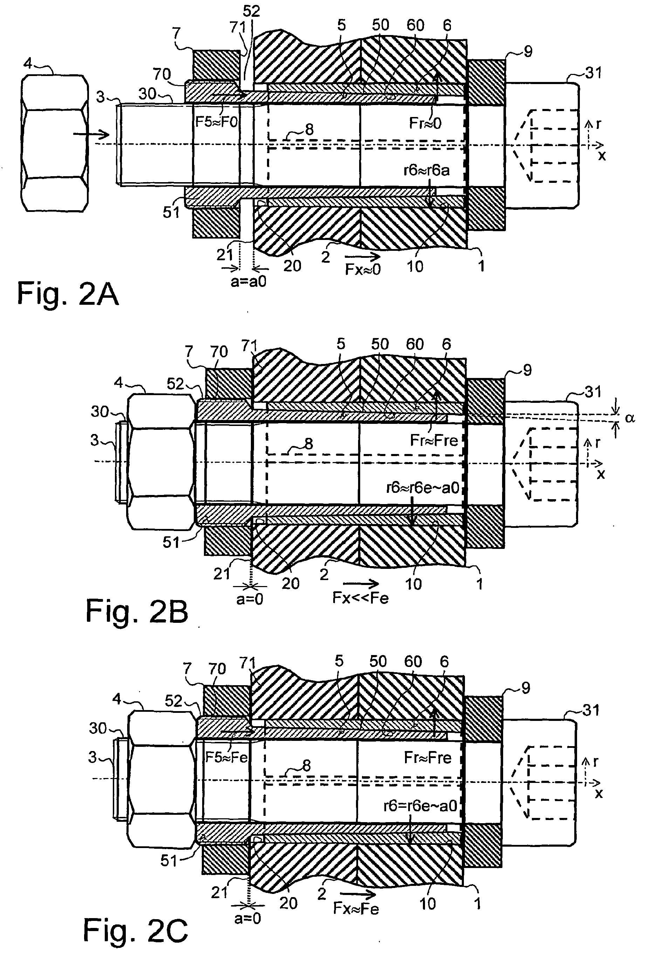

Fig. 2A zeigt einen ersten Zwischenschritt eines Verbindungsverfahrens der ersten und der zweiten Komponente 1, 2, wobei die Anordnung bereits so weit zusammengesetzt ist, dass sowohl das konische Zwischenspannelement 6 als auch anschließend das konische Spannelement 5 in die Öffnungen 10, 20 der ersten bzw. zweiten Komponente 1, 2 eingesetzt sind. So wird ein Nullpunkt für die weiteren Verfahrensschritte definiert. Dabei erfolgt das Einsetzen des konischen Spannelements 5 vorzugsweise so weit, dass Fertigungstoleranzen der einzelnen Komponenten und Elemente aufgehoben werden. Dies wird erzielt, indem die beteiligten Teile so weit zusammengeschoben werden, dass ein radial durchgehender Formschluss entsteht, jedoch vorzugsweise noch kein radialer Kraftschluss entsteht. Vorzugsweise erfolgt in dieser Stellung noch kein Aufweiten des konischen Zwischenspannelements 6, so dass eine insbesondere in der Öffnung 10 der ersten Komponente 1 wirkende Radialkraft Fr noch nicht, bzw. nicht nennenswert wirkt. In diesem Verfahrensschritt sind somit vorzugsweise sowohl eine axial wirkende Spannelement-Vorspannkraft F5 als auch die Radialkraft Fr noch vernachlässigbar.

Nachfolgend wird die axiale Klemmmutter 7 mit ihrem Klemmmuttergewinde 70 auf dem Außengewinde 52 des konischen Spannelements 5 so weit aufgeschraubt, dass ein definierter Anschlagabstand a mit einem Anschlagabstand in Nullstellung a0 zwischen dem Gegenanschlag 21 an der zweiten Komponente 2 und dem Anschlag 71 an der Klemmmutter 7 verbleibt.

Die Größe des Anschlagabstands in Nullstellung a0 wird derart definiert festgelegt, dass bei einem axialen Versetzen des konischen Spannelements 5 mit der darauf nicht weiter verdrehten, das heißt rotationsfest gehaltenen Klemmmutter 7 in die Öffnung des konischen Zwischenspannelements 6 hinein eine zunehmende Radialkraft Fr bis zu einer End-Radialkraft Fre entsteht.

Fig. 2B zeigt den Zustand mit dem konischen Spannelement 5, welches so weit in das konische Zwischenspannelement 6 eingeschoben ist, wie dies der ursprüngliche Anschlagabstand in Nullstellung a0 ermöglicht. Mit anderen Worten ist das konische Spannelement 15 so weit in das konische Zwischenspannelement 6 eingeschoben, bis die axiale Klemmmutter 7 mit ihrem Gegenanschlag 71 an den Anschlag 21 der zweiten Komponente vollständig anliegend angestoßen ist.

Das Einschieben des konischen Spannelements 5 ist gemäß Fig. 2B dadurch erfolgt, dass die Spannmutter 4 das konische Spannelement 5 entgegen der Gegenkraft der Widerlager, das heißt insbesondere des Schraubenkopfs 31 gegen die beiden zu verspannenden Komponenten 1, 2 gespannt hat. Dabei findet keine Rotation der axialen Klemmmutter 7 relativ zu dem konischen Spannelement 5 statt, so dass die Reduzierung des Abstands der axialen Klemmmutter 7 relativ zu einem konischen Neigungswinkel α der konischen Außen- bzw. Innenkegel 50, 60 des konischen Spannelements 5 bzw. des konischen Zwischenspannelements 6 definiert die Radialkraft Fr vorgibt. Mit anderen Worten kann für jede Anwendung durch die Vorgabe des als Länge messbaren Anschlagabstands in Nullstellung a0 die End-Radialkraft Fre bestimmt werden. Alternativ dazu kann gleichwertig bei bekannter Steigung des Gewindes 30 des Bolzens 3 auch eine Anzahl von Rotationen der Spannmutter 4 als Kriterium zur Definition der End-Radialkraft Fre herangezogen werden.

Bei der in Fig. 2B dargestellten Zwischenstellung des Verspannverfahrens entspricht die Radialkraft Fr bereits in etwa der End-Radialkraft Fre. Außerdem vergrößert sich ein Radius r6 des konischen Zwischenspannelements 6 an einer betrachteten Position von einem Radius r6 des entspannten Zwischenspannelements 6 zu einem Radius r6e des gespannten Zwischenspannelements 6 proportional zu der Einschubstrecke des konischen Spannelements 5 in das konische Zwischenspannelement 6.

Mit dem ersten Anspannen der Verbindungsanordnung mittels der Spannmutter 4 in axialer Richtung x wird somit in erster Linie ein radiales Verspannen unter Aufbringung der End-Radialkraft Fre in radialer Richtung r bewirkt. In der in Fig. 2B dargestellten Verspannungsposition der Spannmutter 4 beträgt eine Axialkraft Fx in axialer Richtung x einen Wert gleich Null oder einen vernachlässigbar geringen Wert.

Die End-Axialkraft Fe wird dadurch erreicht, dass die Spannmutter 4 weiter angespannt wird. Dieses weitere Anspannen der Spannmutter 4 bewirkt jedoch in erster Linie nur ein festeres Verspannen der zu verspannenden Komponenten 1, 2 in der axialen Richtung x und keine oder keine nennenswerte Zunahme der End-Radialkraft Fre. Letztendlich entspricht auch die Spannelement-Vorspannkraft F5 einem Endkraftwert der End-Axialkraft Fe.

Fig. 3 zeigt eine alternative Verbindungsanordnung mit letztendlich den gleichen Verspannungsprinzipien. Anstelle des konischen Spannelements, welches zwischen einen zylindrischen Bolzen und eine als konisches Zwischenspannelement ausgebildete geschlitzte Hülse geschoben wird, ist in dieser Verbindungsanordnung ein modifizierter Bolzen 3* als konisches Gegenspannelement 6* ausgebildet. Der innerhalb der Öffnungen 20, 10 der zweiten bzw. ersten Komponente 2, 1 liegende Abschnitt weist dabei einen konischen Außenkegel 60* auf, welcher mit zunehmendem Verlauf in die erste Öffnung 10 hinein einen zunehmend größeren Durchmesser bzw. Außenumfang aufweist.

Entsprechend ist das konische Spannelement 5* in gegenüber der ersten Ausführungsform ebenfalls modifizierter Ausgestaltung in die Öffnungen 20, 10 eingesetzt. Das konische Spannelement 5*, welches die axiale Klemmmutter 7 trägt, ist mit einer zylindrischen Außenoberfläche und mit einer sich von dem Bereich innerhalb der zweiten Öffnung 20 in den Bereich innerhalb der ersten Öffnung 10 erstreckenden Verlaufs zunehmenden größeren Innenumfang ausgestaltet. Das konische Spannelement 5* trägt somit einen konischen Innenkegel 50*. Außerdem weist das konische Spannelement 5* gemäß der zweiten Ausführungsform einen Schlitz 8* auf, welcher sich von seinem der axialen Klemmmutter 7 bzw. dem für die axiale Klemmmutter 7 vorgesehenen Außengewinde 52 gegenüberliegenden Ende in das konische Spannelement 5* zumindest teilweise hinein erstreckt. Dadurch ist das konische Spannelement 5* in Wechselwirkung mit dem konischen Gegenspannelement 6* bei zunehmendem Einschieben des konischen Spannelements 5* aufweitbar und somit gegen die Öffnungswandungen der zweiten und der ersten Öffnung 20, 10 spannbar.

Die zweite dargestellte Ausführungsform weist außerdem anstelle eines Bolzens mit einem Schraubenkopf einen Gewindebolzen als Bolzen 3* auf, auf welchem auf beiden Endabschnitten eine Mutter 4 aufschraubbar ist. Dabei ist die der eigentlichen Spannmutter 4 gegenüberliegend angeordnete Mutter als eine Gegenmutter 31* im Sinne eines Widerlagers angeordnet und wird vor dem ersten Verspannen der Spannmutter 4 in eine definierte und danach vorzugsweise nicht mehr veränderte Stellung verbracht. Prinzipiell kann aber auch eine axiale Verspannung über diese Gegenmutter 31* erfolgen.

Fig. 4 zeigt eine noch weiter modifizierte Ausführungsform, bei welcher die erste Komponente 1° modifiziert ausgebildet ist. Anstelle einer Durchgangsöffnung weist die erste Komponente 1° eine Sacklochöffnung auf, welche nur in die erste Komponente 1° hineinführt.

Mittels eines Bolzenaufnahmegewindes 11° ist der Bolzen 3° in diesem Fall lagefest in der ersten Komponente 1° eingeschraubt. Optional könnte der Bolzen 3° jedoch anstelle einer Einschraubung in die erste Komponente auch in anderer Art und Weise fest mit dieser verbunden sein, beispielsweise an der ersten Komponente angeschweißt sein. Prinzipiell wäre sogar eine gedrehte Ausführung möglich, bei welcher der Bolzen als einstückiger Bestandteil der ersten Komponente ausgestaltet ist, solange zumindest eine um diesen herum teilweise in die erste Komponente 1° hineinführende Öffnung 10° verbleibt, welche zum Aufnehmen und zum radialen Verspannen des konischen Spannelements 5* und des konischen Gegenspannelements 6* verbleibt.

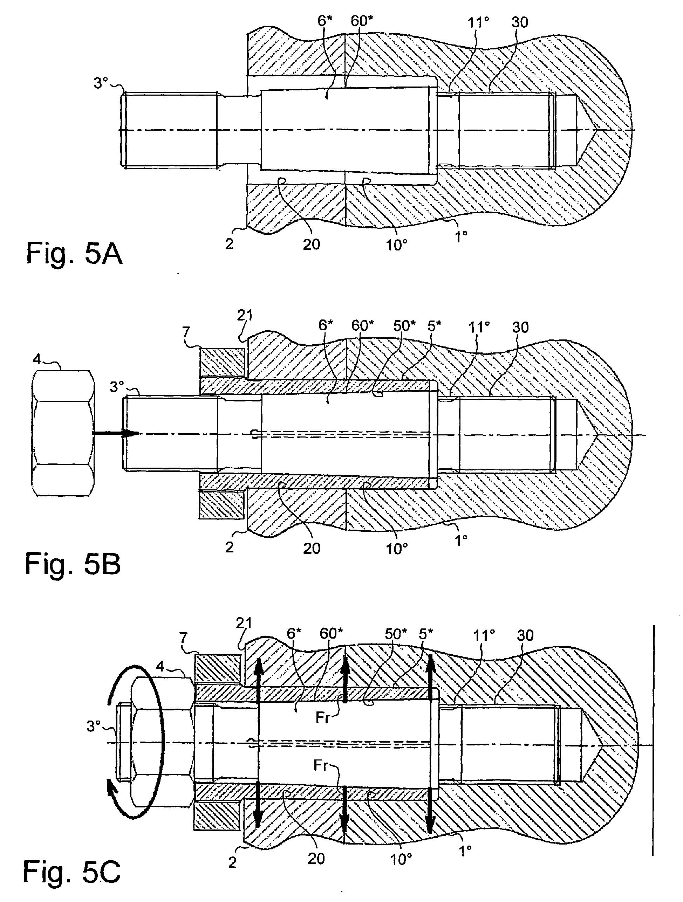

Fig. 5A - 5F zeigen anhand der dritten Ausführungsform einen Verfahrensablauf vergleichbar dem anhand Fig. 2A - 2C beschriebenen Verfahrensablauf.

Fig. 5A zeigt dabei einen frühen Verfahrensschritt, bei dem der Bolzen 3° in das Gewinde 11° der ersten Komponente 1° eingeschraubt ist. Vorderseitig des Gewindes führt der Bolzen 3° durch die Öffnung 10° der ersten Komponente 1° und dann durch die durch die Öffnung 20 der zweiten Komponente 2 hindurch. Dabei verbleibt zwischen dem konischen Außenumfang des Bolzens 3° mit dem Außenkegel 60* und der Innenwandung der beiden Öffnungen 10°, 20 ein freier Raum.

Nachfolgend wird, wie in Fig. 5B skizziert, in diesen freien Raum das konische Spannelement 5* so weit eingeschoben, wie dies der Außenkegel 60* des Bolzens 3° und der darauf geschobene Innenkegel 50* des konischen Spannelements 5* zulassen, um Fertigungstoleranzen auszugleichen bzw. einen radialen Formschluss zu erzielen. Dadurch wird der Nullpunkt definiert. Nachfolgend wird die axiale Klemmmutter 7 auf dem konischen Spannelement 5* in den Anschlagabstand bei der Nullstellung a gedreht und dann die Spannmutter 4 auf dem Bolzen 3° aufgeschraubt.

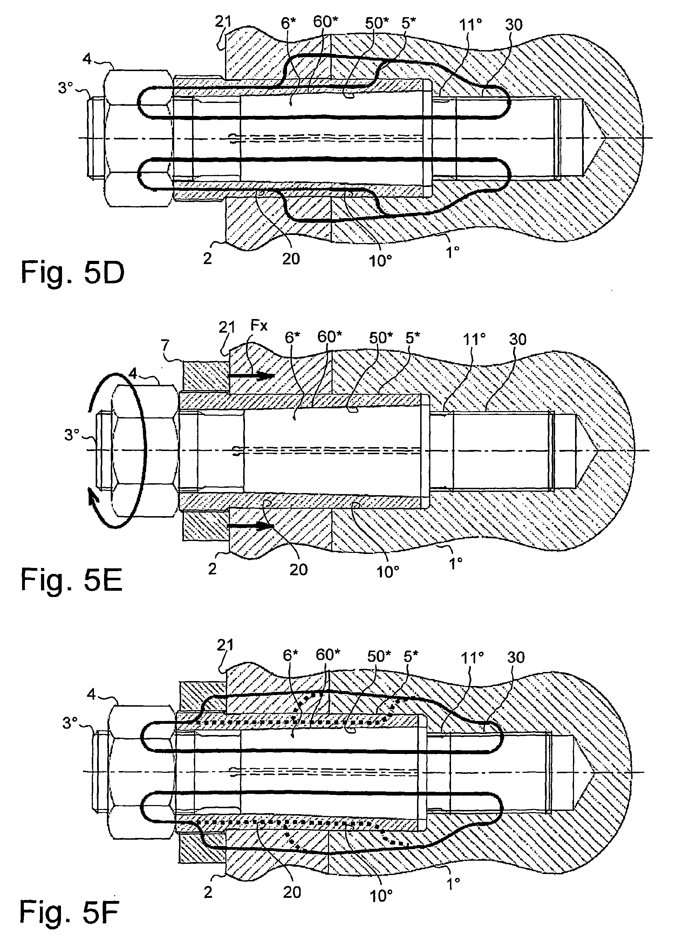

Fig. 5C veranschaulicht die zunehmende wirkende radiale Last bzw. Radialkraft Fr beim Schrauben der Spannmutter 4 gegen das konische Spannelement 5*, solange die Klemmmutter 7 nicht an den Anschlag 21 anschlägt. Dadurch entsteht ein in Fig. 5D mittels durchgezogener Linien skizzierter Kraftfluss in den so miteinander verspannten Komponenten 1°, 2 und weiteren Elementen, d.h. dem Bolzen 3°, dem konischen Element 5* und der Spannmutter 4.

Fig. 5E skizziert die Kraftänderung nach dem Anschlagen der Klemmmutter 7 an dem Anschlag 21 bei weiterem Anziehen der Spannmutter 4. Es wirkt die zunehmend größer werdende Axialkraft Fx. Fig. 5F zeigt die Verbindungsanordnung in der Endstellung mit den allseitig wirkenden Vorspannkräften. Mittels durchgezogener Linien ist dabei der axiale Kraftfluss in den so miteinander verspannten Komponenten 1°, 2 und weiteren Elementen, d.h. dem Bolzen 3°, dem konischen Element 5* und der Spannmutter 4, skizziert und mittels der gestrichelten Linien der demgegenüber abweichende radiale Kraftfluss.

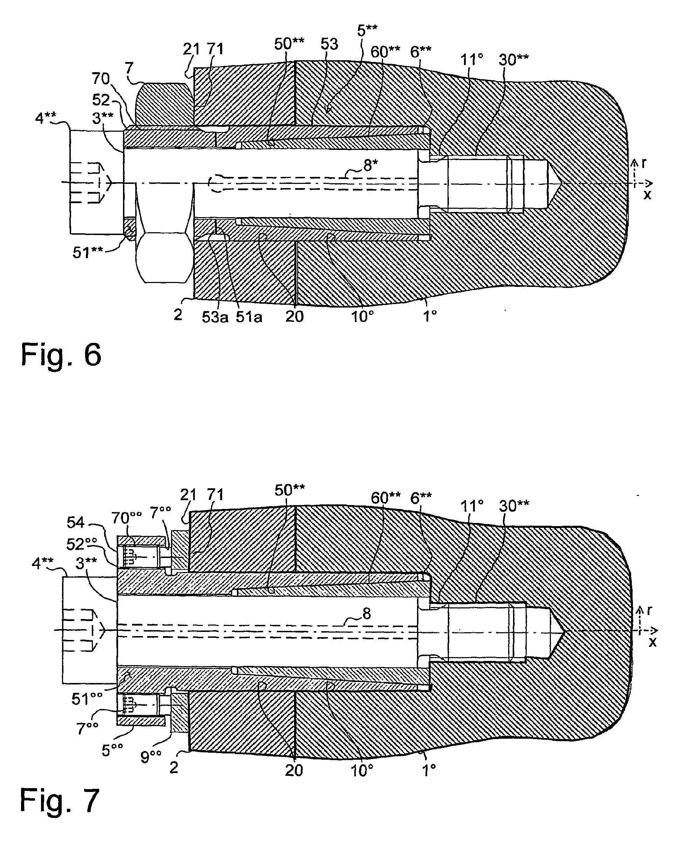

Fig. 6 zeigt eine weiter modifizierte Ausführungsform, bei welcher anstelle eines von der ersten zu verspannenden Komponente 1° durch die zweite zu verspannende Komponente 2 hindurchführenden Bolzens mit einer Spannmutter ein Bolzen geführt ist, welcher als eine Spannschraube 3** ausgebildet ist. Die Spannschraube 3** weist einen Spannschrauben-Kopf 4** und an einem dem Spannschrauben-Kopf 4** gegenüberliegenden Endabschnitt ein Gewinde 30** auf. Im montierten Zustand ist das Gewinde 30** der Spannschraube 3** wieder in ein Bolzenaufnahmegewinde 11* in der ersten zu verspannenden Komponente eingeschraubt. Ausgestaltungen mit einem Bolzen und einer Spannmutter werden für groß dimensionierte Anordnungen bevorzugt. Dagegen ermöglicht eine Ausgestaltung mit einem als Spannschraube 3** ausgebildeten Bolzen eine Dimensionierung mit sehr kleinen Elementen mit einem Durchmesser von insbesondere 20 mm oder weniger.

Als weiterer Unterschied ist bei der Ausgestaltung gemäß Fig. 6 ein konisches Spannelement 5** als eine geschlitzte, das heißt insbesondere einen Schlitz 8* aufweisende Spannhülse mit einem Innenkegel 50** eingesetzt. Der Innenkegel 50** wirkt zusammen mit einem zwischen dem Innenkegel 50** und dem als Spannschraube 3** ausbildeten Bolzen eingesetzten Gegenspannelement 6**. Das hülsenförmige Gegenspannelement 6** ist als ein Außenkegel 60** ausgebildet. Bevorzugt aber nicht zwingend notwendig, liegt das dem Gewinde 30** der Spannschraube 3** in axialer Richtung x zugewandte Ende des Gegenspannelements 6** an einer rückseitigen Wandung der Durchgangsöffnung 10* in der ersten zu verspannenden Komponente 1* an. Das konische Spannelement 5** verläuft mit sich in von der Klemmmutter wegführenden axialen Richtung vergrößerndem Innenumfang.

Gemäß einer weiteren Ausgestaltung, die auch eigenständig umsetzbar ist, ist das konische Spannelement 5** als mehrteiliges Spannelement ausgestaltet. Insbesondere ist es untergliedert in einen ersten Abschnitt des Spannelement 5* und einen zweiten, konisch verlaufenden Abschnitt 53 des Spannelements 5**. Der erste Abschnitt 51** trägt das Außengewinde 52 zum Aufschrauben der axialen Klemmmutter 7 und ragt ein Stück in die Durchgangsöffnung 20 der zweiten zu verspannenden Komponente 2 in axialer Richtung x hinein. An dieser Seite weist der erste Abschnitt 51** eine stirnseitige Anschlagfläche 51a auf, welche im eingesetzten und spannenden Zustand gegen eine entsprechend ausgebildete Anschlagfläche 53a des zweiten, konischen Abschnitts 53 drückt. Dadurch wird ein modulares System ermöglicht. Dieses ermöglicht abhängig von insbesondere einer Dicke bzw. Breite der zweiten zu verspannenden Komponente 2 das Einsetzen zylindrischer Zwischenstücken oder unterschiedlich tief in die Durchgangsöffnung 20 hineinragenden ersten Abschnitten 51**.

Fig. 7 zeigt eine noch weiter modifizierte Ausführungsform, welche eigenständig oder in Verbindung mit den übrigen beschriebenen Ausführungsformen umsetzbar ist. Anstelle einer Klemmmutter wird zumindest eine Klemmschraube 7°°, vorzugsweise eine Vielzahl von Klemmschrauben 7°°, eingesetzt. Anstelle eines Außengewindes weist das konische Spannelement 5°° entsprechend eine Vielzahl von Gewindebohrungen 54 auf, welche achsparallel zur axialen Richtung x durch einen Kopfabschnitt 51°° des konischen Spannelements 5°° hindurchführen. In den Gewindebohrungen 54 bzw. in deren Innengewinden 52°° ist jeweils eine der axialen Klemmschrauben 7°° mit ihrem Klemmschraubengewinde 70°° als Klemmelement eingesetzt. Beispielhaft sind Madenschrauben dargestellt, jedoch können auch aus der Gewindebohrung 54 zu beiden Seiten herausragende Klemmschrauben verwendet werden.

Die Klemmschrauben 7°° führen aus dem Kopfabschnitt 51°° des konischen Spannelements 5°° in Richtung der zweiten Komponente 2 heraus.

Vorzugsweise ist zwischen die Klemmschrauben 7°° und eine Anschlagfläche in Form des Anschlags 21 der zweiten zu verspannenden Komponente 2 eine Unterlegscheibe 9°° eingesetzt. Dadurch liegen die stirnseitigen Flächen der Klemmschrauben 7°° nicht auf einzelnen Punkten der Oberfläche der zweiten zu verspannenden Komponente 2 an, wenn der endverspannte Zustand erreicht ist. Bei der Montage wird entsprechend nicht eine Klemmmutter bis auf einen definierten Abstand an die Oberfläche bzw. den Anschlag 21 der zweiten zu verspannenden Komponente 2 herangeschraubt, sondern entsprechend die Vielzahl der Klemmschrauben 7°° bis auf einen definierten Abstand an den Anschlag 21 bzw. an eine entsprechend den Klemmschrauben 7°° gegenüberliegende Oberfläche der Unterlegscheibe 9°° herangeschraubt.

Statt einer hub-verstellbaren Klemmmutter sind somit mehrere Klemmschrauben in Form von vorzugsweise Gewindestiften eingesetzt, wobei bei der dargestellten Ausführungsform wieder eine Spannschraube 3** zum Endverspannen als Spannbolzen verwendet ist. Anstelle der Spannschraube 3** kann natürlich auch ein Bolzen mit einer Spannmutter eingesetzt werden. Anstelle der Klemmmutter ist somit eine Anordnung dezentraler Klemmschrauben eingesetzt, welche einen Verstellweg begrenzt passiv vorweg einstellbar machen. Vorteilhaft ist insbesondere die Möglichkeit einer Nivellierung auch auf unebenen Oberflächen der zweiten zu verspannenden Komponente 2.

### Bezugszeichenliste:

- 1, 1°: erste zu verspannende Komponente
- 10, 10°: Öffnung in 1, 1°
- 11°: Bolzenaufnahmegewinde in 1°
- 2: zweite zu verspannende Komponente
- 20: Durchgangsöffnung in 2
- 21: Anschlag für 7
- 3, 3*, 3°: Bolzen
- 3**: Spannschraube als Bolzen
- 30: Gewinde an 3
- 30**: Gewinde an 3**
- 31: Schraubenkopf an 3
- 31*: Widerlager / Gegenmutter an 3
- 4: Spannmutter
- 4**: Spannschrauben-Kopf
- 5, 5*, 5**, 5°°: konisches Spannelement, insbesondere Spannhülse
- 50: Außenkegel von 5
- 50*, 50**: Innenkegel von 5*, 5**
- 51, 51°°: Kopfabschnitt von 5
- 51**: erster Abschnitt von 5**
- 51a: Anschlagfläche von 51**
- 52: Außengewinde an 51
- 52°°: Innengewinde in 54
- 53: zweiter, konischer Abschnitt von 5**
- 53a: Anschlagfläche von 53
- 54: Gewindebohrung in 51°°
- 6, 6*, 6**: konisches Zwischenspannelement/Gegenspannelement zu 5
- 60: Innenkegel von 6
- 60*, 60**: Außenkegel von 6*, 6**
- 7: axiale Klemmmutter als Klemmelement
- 7°°: axiale Klemmschraube als Klemmelement
- 70: Klemmmuttergewinde in 7
- 70°°: Klemmschraubengewinde an 7°°
- 71: Gegenanschlag zu 21
- 8, 8*: Schlitz in 5 bzw. 6
- 9, 9°°: Widerlager / Unterlegscheibe
- a: Anschlagabstand zwischen 71 und 21
- a0: Anschlagabstand in Nullstellung
- F: Kraftfluss
- F5: Spannelement-Vorspannkraft
- Fr: Radialkraft
- Fre: End-Radialkraft
- Fx: Axialkraft
- Fe: End-Axialkraft
- r: radiale Richtung zu 3
- r6: Radius des entspannten Zwischenspannelements 6
- r6e: Radius des gespannten Zwischenspannelements 6
- x: Bolzenachse
- α: konischer Neigungswinkel

## Patentansprüche

1. Verbindungsverfahren zum Verbinden zumindest einer ersten und einer zweiten miteinander zu verspannenden Komponente (1, 2; 1°, 2) insbesondere mit allseitigem Kraftschluss, bei dem
- ein lagefest von der ersten Komponente (1; 1°) abstehender Bolzen (3; 3*; 3°) durch eine Durchgangsöffnung (20) in der zweiten Komponente (2) geführt wird,
- an einem Gewinde (30) an dem Bolzen (3; 3*; 3°), insbesondere an einem zumindest von der ersten Komponente (1; 1°) beabstandeten oder abgewandten Gewinde (30), eine Spannmutter (4) zum Verspannen der Komponenten (1, 2; 1°, 2) angeschraubt wird oder der als eine Spannschraube (3**) mit einem Kopf (4**) ausgebildete Bolzen mit einem Gewinde (30**) der Spannschraube (3**) in Richtung der ersten Komponente (1°) an der oder hinter der ersten Komponente (1°) zum Verspannen der Komponenten (1, 2; 1°, 2) geschraubt wird,
- vor dem Anschrauben der Spannmutter (4) oder des Einschraubens der Spannschraube (3**) ein konisches Spannelement (5; 5*; 5**, 5°°) zwischen den aneinander anliegenden Komponenten (1, 2; 1°, 2) und der Spannmutter (4) oder zwischen den aneinander anliegenden Komponenten (1, 2; 1°, 2) und dem Kopf (4**) zum radialen Verspannen an oder auf dem Bolzen (3; 3*; 3°; 3**) in Richtung der ersten Komponente eingesetzt wird,
- nach dem Einsetzen des Spannelements (5; 5*; 5**, 5°°) eine Klemmmutter (7) oder zumindest eine Klemmschraube (7°°) am Spannelement (5; 5*; 5**, 5°°) angeschraubt wird unter Belassung eines Anschlagabstands (a) größer Null zu der zweiten Komponente (2), und
- danach die Spannmutter (4) oder der Kopf (4**) der Spannschraube (3**) gegen das konische Spannelement (5; 5*) und/oder gegen die Klemmmutter (7) oder gegen die zumindest eine Klemmschraube (7°°) gespannt wird.

2. Verfahren nach Anspruch 1, wobei
- mit der Spannmutter (4) oder mit der Spannschraube (3**) das konische Spannelement (5; 5*) bei Reduzierung des Anschlagabstands (a) zu Null unter Aufbau einer sich zwischen den Komponenten (1, 2; 1°, 2) bis zu einer solchen Nullstellung aufbauenden Radialkraft (Fr ≈ Fre) angespannt wird und
- die Spannmutter (4) oder die Spannschraube (3**) gegen das Spannelement (5; 5*; 5**; 5°°) und/oder gegen die Klemmmutter (7) oder gegen die zumindest eine Klemmschraube (7°°) wirkend nach der Reduzierung des Anschlagabstands (a) zu Null weiter angespannt wird unter Aufbau einer sich zwischen den Komponenten (1, 2; 1°, 2) zunehmend aufbauenden Axialkraft (Fx).

3. Verfahren nach Anspruch 2, wobei der belassene Anschlagabstand (a) größer Null zu der zweiten Komponente (2) abhängig von einem konischen Neigungswinkel (α) des Spannelements (5; 5*; 5**; 5°°) und abhängig von der bei der Nullstellung aufzubauenden Radialkraft (Fr ≈ Fre) eingestellt wird.

4. Verfahren nach einem vorstehenden Anspruch, wobei der Anschlagabstand (a0) eingestellt wird als Anzahl von bis zur Nullstellung zu drehenden Windungen des Gewindes (30; 30**) und/oder als Rotationswinkel der Spannmutter (4) oder der Spannschraube (3**) bis zur Nullstellung.

5. Verbindungsanordnung zum Verbinden zumindest einer ersten und einer zweiten miteinander, insbesondere mit allseitigem Kraftschluss miteinander zu verbindenden Komponente (1, 2; 1°, 2), aufweisend
- eine Durchgangsöffnung (20) in der zweiten Komponente (2),
- einen Bolzen (3; 3*; 3°), welcher lagefest zu der ersten Komponente (1; 1°) von der ersten Komponente (1; 1°) ausgehend durch die Durchgangsöffnung (20) in der zweiten Komponente (2) führt und an welchem ein Gewinde (30) ausgebildet ist,
- eine Spannmutter (4), welche zum Verspannen der Komponenten (1, 2; 1°, 2) auf dem Gewinde (30), insbesondere auf dem zumindest von der ersten Komponente (1; 1°) beabstandet oder abgewandt am Bolzen (3; 3*; 3°) ausgebildeten Gewinde (30) aufgeschraubt ist, oder
- dem als eine Spannschraube (3**) mit einem Kopf (4**) und dem Gewinde (30**) ausgebildeten Bolzen, wobei das Gewinde (30**) der Spannschraube (3**) in Richtung der ersten Komponente (1°) an der oder hinter der ersten Komponente (1°) zum Verspannen der Komponenten (2, 1°) verschraubt ist, und
- ein Kegelpaar, das einen Innenkegel (50*; 60; 50**) mit einem Schlitz (8*; 8) zum Ermöglichen eines Aufspreizens des Innenkegels und einen Außenkegel (50; 60*; 60**) aufweist, wobei
- der Innenkegel (50*; 50**) als ein konisches Spannelement (5*; 5**; 5°°) ausgebildet ist, welches zum radialen Verspannen auf dem Bolzen (3*; 3°) zwischen den Komponenten (1, 2; 1°, 2) und der Spannmutter (4) oder zwischen den Komponenten (1°, 2) und dem Kopf (4**) der Spannschraube (3**) angeordnet ist, und der Bolzen (3*; 3°) oder die Spannschraube (3**) den Außenkegel (60*; 60**) trägt oder ausbildet,
- oder der Innenkegel (60) als ein konisches Zwischenspannelement (6), welches durch den Schlitz (8) aufspreizbar zum radialen Verspannen ist, einem den Außenkegel (50) tragenden oder ausbildenden konischen Spannelement (5) zwischen dem Bolzen (3) und den Komponenten (1, 2) zumindest teilweise gegenüberliegend angeordnet ist, und
- wobei eine Klemmmutter (7) mittels eines Klemmmuttergewindes (70) oder zumindest eine Klemmschraube (7°°) mittels eines Klemmschraubengewindes (70°°) am konischen Spannelement (5) angeschraubt ist und gegen eine Anschlagfläche (21) der zweiten Komponente (2) gespannt eine Bewegungsmöglichkeit des Spannelements (5; 5**; 5°°) beschränkt.

6. Verbindungsanordnung nach Anspruch 5, wobei eine Spannelement-Vorspannkraft (F5) der Klemmmutter (7) oder der zumindest einen Klemmschraube (7°°) gegen die zweite Komponente (2) in einem definierten oder definierbaren Verhältnis zu einer Radialkraft (Fr) in radialer Richtung (r) zum Bolzen (3; 3*; 3°) oder zum Schaft der Spannschraube (3**) steht.

7. Verbindungsanordnung nach einem der Ansprüche 5 oder 6, wobei im verspannten Zustand das konische Spannelement (5; 5*; 5**; 5°°) radial verspannt ist in einer in der ersten Komponente (1; 1°) ausgebildeten Öffnung (10; 10°), wobei der Bolzen (3; 3*; 3°) oder Schaft der Spannschraube (3**) durch diese Öffnung (10; 10°) in der ersten Komponente (1; 1°) führt.

8. Verbindungsanordnung nach Anspruch 7, wobei die Öffnung (10) durch die erste zu verspannende Komponente (1) hindurchführt und der Bolzen (3) oder die Spannschraube mittels eines auf der zur zweiten Komponente (2) gegenüberliegenden Seite angeordneten Widerlagers (9, 31; 9, 31*) gegen die erste Komponente gespannt ist.

9. Verbindungsanordnung nach Anspruch 7, wobei die Öffnung (10) als Sackloch in der ersten zu verspannenden Komponente (1) ausgebildet ist und der Bolzen (3°) mittels seinem zur zweiten Komponente (2) gegenüberliegenden Endabschnitt oder die Spannschraube (3**) mittels ihrem zur zweiten Komponente (2) gegenüberliegenden Endabschnitt in der ersten Komponente (1) fest angeordnet ist, insbesondere eingeschraubt ist.

10. Verbindungsanordnung nach einem der Ansprüche 5 bis 9, wobei der Bolzen (3*) einen Abschnitt mit einer konischen Oberfläche als dem Außenkegel (60*) als einem konischen Gegenspannelement (6*) zum konischen Spannelement (5*) aufweist.

11. Verbindungsanordnung nach einem der Ansprüche 5 bis 10, wobei alle radiale und axiale Kräfte übertragenden Komponenten aus einem metallischen Material ausgebildet sind.

12. Verbindungsanordnung nach einem der Ansprüche 5 bis 11, wobei welche eine Vielzahl solcher Klemmschrauben (7°°) aufweist, wobei die Klemmschrauben (7°°) über einen Umfang des Spannelements (5**) verteilt angeordnet sind und durch Gewindebohrungen im Spannelement (5**) verstellbar in Richtung der Anschlagfläche (21) der zweiten Komponente (2) ragen.

13. Verbindungsanordnung nach Anspruch 12, wobei die Klemmschrauben (7°°) über einen Umfang eines Kopfabschnitts (51°°) des Spannelements (5°°) verteilt angeordnet sind.

14. Verbindungsanordnung nach einem der Ansprüche 5 bis 13, wobei eine Unterlegscheibe (9°°) zwischen die Klemmmutter (7) und die Anschlagfläche (21) gesetzt ist oder zwischen die zumindest eine Klemmschraube (7°°) und die Anschlagfläche (21) gesetzt ist.

15. Verbindungsanordnung nach einem der Ansprüche 5 bis 14, wobei das konische Spannelement (5**) mit dem Innenkegel (50**) einen ersten Abschnitt (51**) und einen zweiten Abschnitt (53) als zwei voneinander getrennte Komponenten aufweist, wobei an dem ersten Abschnitt (51**) die Klemmmutter (7) oder die zumindest eine Klemmschraube (7°°) angeschraubt ist und wobei der zweite Abschnitt (53) konisch ausgebildet ist und in zumindest die erste Komponente (1; 1°) hineinragt.

## Claims

1. Connecting method for connecting at least one first and one second component (1, 2; 1 °, 2) to be clamped with each other, in particular with a non-positive connection on all sides, wherein
- a bolt (3; 3*; 3°) extending in a fixed position from the first component (1; 1°) is extended through a through opening (20) in the second component (2),
- on a thread (30) on the bolt (3; 3*; 3°), in particular on a thread (30) at least spaced from the first component (1; 1°) or facing away from it, a clamping nut (4) is screwed for clamping the components (1, 2; 1 °, 2), or the bolt formed as a clamping screw (3**) with a head (4**) with a thread (30**) of the clamping screw (3**) is screwed toward the first component (1°) on or behind the first component (1°) for clamping the components (1, 2; 1°, 2),
- prior to screwing the clamping nut (4) or prior to screwing-in the clamping screw (3**), a conical clamping element (5; 5*; 5**, 5°°) is inserted in a direction toward the first component between the components (1, 2; 1 °, 2) adjacent to each other and the clamping nut (4) or between the components (1, 2; 1°, 2) adjacent to each other and the head (4**) for radial clamping at or on the bolt (3; 3*; 3°; 3**),
- after inserting the clamping element (5; 5*; 5**, 5°°), a locking nut (7) or at least one locking screw (7°°) is screwed onto the clamping element (5; 5*; 5**, 5°°) while an abutment space (a) greater than zero is left with respect to the second component (2), and
- subsequently the clamping nut (4) or the head (4**) of the clamping screw (3**) is clamped against the conical clamping element (5; 5*) and/or against the locking nut (7) or against the at least one locking screw (7°°).

2. Method according to claim 1, wherein
- with the aid of the clamping nut (4) or the clamping screw (3**), the conical clamping element (5; 5*) is clamped while reducing the abutment space (a) to zero while building up a radial force (Fr ≈ Fre) built-up between the components (1, 2; 1°, 2) up to such a zero position, and
- the clamping nut (4) or the clamping screw (3**) is further clamped while acting against the clamping element (5; 5*; 5**, 5°°) and/or against the locking nut (7) or against at least one locking screw (7°°) after reducing the abutment space (a) to zero while building up an axial force (Fx) increasingly built-up between the components (1, 2; 1 °, 2).

3. Method according to claim 2, wherein the abutment space (a) greater than zero left with respect to the second component (2) is adjusted depending on a conical inclination angle (a) of the clamping element (5; 5*; 5**, 5°°) and depending on the radial force (Fr ≈ Fre) to be built up at the zero position.

4. Method according to any of the preceding claims, wherein the abutment space (a0) is adjusted as a number of turns of the thread (30, 30**) to be rotated up to the zero position and/or as a rotation angle of the clamping nut (4) or the clamping screw (3**) up to the zero position.

5. Connecting arrangement for connecting at least one first and one second component (1, 2; 1 °, 2) to be connected with each other, in particular with non-positive connection by force on all sides, comprising
- a through opening (20) in the second component (2),
- a bolt (3; 3*; 3°), extending in a fixed position with respect to the first component (1; 1°) from the first component (1; 1°) through the through opening (20) in the second component (2) and on which a thread (30) is formed,
- for clamping the components (1, 2; 1°,2), a clamping nut (4) screwed onto the thread (30), in particular on the thread (30) formed on the bolt (3; 3*; 3°) at least spaced from the first component (1; 1°) or facing away from it, or
- on the bolt formed as a clamping screw (3**) with a head (4**) and a thread (30**), wherein the thread (30**) of the clamping screw (3**) is screwed toward the first component (1°) at or behind the first component (1°) for clamping the components (2, 1 °), and
- a cone pair comprising an inner cone (50*; 60; 50**) with a split (8*; 8) for enabling an expansion of the inner cone, and an outer cone (50; 60*; 60**), wherein
- the inner cone (50*; 50**) is formed as a conical clamping element (5*; 5**; 5°°), which is arranged between the components (1, 2; 1°, 2) and the clamping nut (4) or between the components (1°, 2) and the head (4**) of the clamping screw (3**) for radial clamping on the bolt (3*; 3°), and the bolt (3*; 3°) or the clamping screw (3**) carries or forms the outer cone (60*; 60**),
- or the inner cone (60) is arranged as a conical intermediate clamping element (6), which is expandable by means of the split (8) for radial clamping, at least partially opposing the conical clamping element (5) carrying or forming the outer cone (50) between the bolt (3) and the components (1, 2), and
- wherein a locking nut (7) is screwed by means of a locking nut thread (70) or at least one locking screw (7°°) is screwed by means of a locking screw thread (70°°) onto the conical clamping element (5) and limits the movability of the clamping element (5; 5**; 5°°) clamped against an abutment surface (21) of the second component (2).

6. Connecting arrangement according to claim 5, wherein a clamping element pre-clamping force (F5) of the locking nut (7) or the at least one locking screw (7°°) against the second component (2) is in a defined or definable ratio to a radial force (Fr) in the radial direction (r) to the bolt (3; 3*; 3°) or to the shaft of the clamping screw (3**).

7. Connecting arrangement according to any of the claims 5 or 6, wherein the conical clamping element (5; 5*; 5**, 5°°), in the clamped state, is radially clamped in an opening (10; 10°) formed in the first component (1; 1°), wherein the bolt (3; 3*; 3°) or the shaft of the clamping screw (3**) extends through this opening (10; 10°) in the first component (1; 1 °).

8. Connecting arrangement according to claim 7, wherein the opening (10) extends through the first component (1) to be clamped, and the bolt (3) or the clamping screw is clamped against the first component by means of a counter bearing (9, 31; 9, 31*) on the side facing away from the second component (2).

9. Connecting arrangement according to claim 7, wherein the opening (10) is formed as a blind hole in the first component (1) to be clamped, and the bolt (3°) is fixedly arranged at, in particular screwed into, the first component (1) by means of its end section facing away from the second component (2), or the clamping screw (3**) is fixedly arranged at, in particular screwed into, first component (1) by means of its end section facing away from the second component.

10. Connecting arrangement according to any of the claims 5 to 9, wherein the bolt (3*) has a section with a conical surface as the outer cone (60*) as a conical counter clamping element (6*) for the conical clamping element (5*).

11. Connecting arrangement according to any of claims 5 to 10, wherein all components transmitting radial and axial forces are made of a metallic material.

12. Connecting arrangement according to any of the claims 5 to 11, which comprises a plurality of such locking screws (7°°), wherein the locking screws (7°°) are arranged distributed over a circumference of the clamping element (5**) and extend through threaded bores in the clamping element (5**) adjustable toward the abutment surface (21) of the second component (2).

13. Connecting arrangement according to claim 12, wherein the locking screws (7°°) are arranged distributed over a circumference of a head section (51 °°) of the clamping element (5°°).

14. Connecting arrangement according to any of the claims 5 to 13, wherein a washer (9°°) is inserted between the locking nut (7) and the abutment surface (21) or between the at least one locking screw (7°°) and the abutment surface (21).

15. Connecting arrangement according to any of the claims 5 to 14, wherein the conical clamping element (5**) with the inner cone (50**) has a first section (51 **) and a second section (53) as two components separate from each other, wherein the locking nut (7) or the at least one locking screw (7°°) is screwed onto the first section (51**), and wherein the second section (53) is conically formed and extends at least into the first component (1; 1 °).

## Revendications

1. Procédé d'assemblage pour l'assemblage d'au moins un premier et un deuxième composants (1,2; 1°, 2) à assembler entre eux par serrage, en particulier avec liaison à force de tous côtés, selon lequel
- un boulon (3 ; 3* ; 3°), faisant saillie en position fixe du premier composant (1 ; 1°), est dirigé à travers une ouverture de passage (20) dans le deuxième composant (2),
- un écrou de serrage (4) est, pour l'assemblage par serrage des composants (1, 2 ; 1°, 2), vissé sur un filetage (30) sur le boulon (3 ; 3* ; 3°), en particulier sur un filetage (30) au moins distant du premier composant (1 ; 1°) ou opposé à celui-ci, ou bien ledit boulon réalisé sous la forme d'une vis de serrage (3**) dotée d'une tête (4**) est, pour l'assemblage par serrage des composants (1, 2 ; 1°, 2), par un filetage (30**) de la vis de serrage (3**), vissé en direction du premier composant (1°) sur le premier composant (1°) ou derrière celui-ci,
- avant le vissage de l'écrou de serrage (4) ou le vissage de la vis de serrage (3**), un élément de serrage conique (5 ; 5* ; 5**, 5°°) est inséré entre les composants (1, 2 ; 1°, 2) appliqués l'un contre l'autre et l'écrou de serrage (4) ou entre les composants (1, 2 ; 1°, 2) appliqués l'un contre l'autre et la tête (4**), pour le serrage radial contre ou sur le boulon (3 ; 3* ; 3° ; 3**) en direction du premier composant,
- après l'insertion de l'élément de serrage (5 ; 5* ; 5**, 5°°), un écrou de blocage (7) ou au moins une vis de blocage (7°°) est vissé(e) sur l'élément de serrage (5 ; 5* ; 5**, 5°°) en laissant une distance de butée (a) supérieure à zéro par rapport au deuxième composant (2),
- et ensuite, l'écrou de serrage (4) ou la tête (4**) de la vis de serrage (3**) est serré(e) contre l'élément de serrage conique (5 ; 5*) et/ou contre l'écrou de blocage (7), ou contre la vis de blocage au moins unique (7°°).

2. Procédé selon la revendication 1, sachant que
- avec l'écrou de serrage (4) ou avec la vis de serrage (3**), l'élément de serrage conique (5 ; 5*) est serré, tandis que la distance de butée (a) est réduite jusqu'à zéro, en établissant une force radiale (Fr ≈ Fre) qui s'établit entre les composants (1, 2 ; 1°, 2) jusqu'à une telle position zéro,
- et l'écrou de serrage (4) ou la vis de serrage (3**) est, à la suite de la réduction de la distance de butée (a) à zéro, davantage serré(e) en agissant contre l'élément de serrage (5 ; 5* ; 5** ; 5°°) et/ou contre l'écrou de blocage (7), ou contre la vis de blocage au moins unique (7°°), en établissant une force axiale (Fx) qui s'établit progressivement entre les composants (1, 2 ; 1°, 2).

3. Procédé selon la revendication 2, sachant que la distance de butée (a) laissée supérieure à zéro par rapport au deuxième composant (2) est réglée en fonction d'un angle d'inclinaison conique (a) de l'élément de serrage (5 ; 5* ; 5** ; 5°°) et en fonction de la force radiale (Fr ≈ Fre) à établir à la position zéro.

4. Procédé selon l'une des revendications précédentes, sachant que la distance de butée (a0) est réglée comme étant le nombre de spires du filetage (30 ; 30**) à tourner jusqu'à la position zéro, et/ou comme étant l'angle de rotation de l'écrou de serrage (4) ou de la vis de serrage (3**) jusqu'à la position zéro.

5. Dispositif d'assemblage pour l'assemblage d'au moins un premier et un deuxième composants (1, 2 ; 1°, 2) à assembler entre eux, en particulier à assembler entre eux avec liaison à force de tous côtés, présentant
- une ouverture de passage (20) dans le deuxième composant (2),
- un boulon (3 ; 3* ; 3°) qui, en partant du premier composant (1 ; 1°) en position fixe par rapport au premier composant (1 ; 1°), est dirigé à travers l'ouverture de passage (20) dans le deuxième composant (2), et sur lequel est formé un filetage (30),
- un écrou de serrage (4) qui, pour l'assemblage par serrage des composants (1, 2 ; 1 °, 2), est vissé sur le filetage (30), en particulier sur le filetage (30) formé sur le boulon (3 ; 3* ; 3°) au moins à distance ou à l'opposé du premier composant (1;1°),
- ou ledit boulon réalisé sous la forme d'une vis de serrage (3**) dotée d'une tête (4**) et d'un filetage (30**), sachant que le filetage (30**) de la vis de serrage (3**) est, pour l'assemblage par serrage des composants (2, 1 °), vissé en direction du premier composant (1°) sur le premier composant (1°) ou derrière celui-ci,
- et une paire de cônes, qui présente un cône intérieur (50* ; 60 ; 50**), doté d'une fente (8* ; 8) pour permettre un écartement du cône intérieur, et un cône extérieur (50 ; 60* ; 60**),
- sachant que le cône intérieur (50* ; 50**) est réalisé sous la forme d'un élément de serrage conique (5* ; 5** ; 5°°) qui, pour le serrage radial, est disposé sur le boulon (3* ; 3°) entre les composants (1,2; 1°, 2) et l'écrou de serrage (4) ou entre les composants (1°, 2) et la tête (4**) de la vis de serrage (3**), et sachant que le boulon (3* ; 3°) ou la vis de serrage (3**) porte ou forme le cône extérieur (60* ; 60**),
- ou sachant que le cône intérieur (60) est réalisé sous la forme d'un élément de serrage intermédiaire conique (6) qui peut être écarté par la fente (8) pour le serrage radial, et qui est disposé entre le boulon (3) et les composants (1, 2) au moins pour partie en vis-à-vis d'un élément de serrage conique (5) portant ou formant le cône extérieur (50),
- et sachant qu'un écrou de blocage (7), au moyen d'un filetage d'écrou de blocage (70), ou au moins une vis de blocage (7°°), au moyen d'un filetage de vis de blocage (70°°), est vissé(e) sur l'élément de serrage conique (5) et, en étant serré contre une surface de butée (21) du deuxième composant (2), limite la faculté de déplacement de l'élément de serrage (5 ; 5** ; 5°°).

6. Dispositif d'assemblage selon la revendication 5, sachant qu'une force de précontrainte d'élément de serrage (F5) de l'écrou de blocage (7) ou de la vis de blocage au moins unique (7°°) contre le deuxième composant (2) se trouve dans un rapport défini ou définissable par rapport à une force radiale (Fr) en direction radiale (r) par rapport au boulon (3 ; 3* ; 3°) ou au corps de la vis de serrage (3**).

7. Dispositif d'assemblage selon la revendication 5 ou 6, sachant que dans l'état assemblé par serrage, l'élément de serrage conique (5; 5*; 5**; 5°°) est radialement serré dans une ouverture (10 ; 10°) formée dans le premier composant (1 ; 1 °), sachant que le boulon (3 ; 3* ; 3°) ou le corps de la vis de serrage (3**) est dirigé à travers cette ouverture (10 ; 10°) dans le premier composant (1 ; 1°).

8. Dispositif d'assemblage selon la revendication 7, sachant que l'ouverture (10) mène à travers le premier composant (1) à assembler par serrage, et le boulon (3) ou la vis de serrage est serré(e) contre le premier composant au moyen d'un contre-appui (9, 31 ; 9, 31*) disposé sur le côté opposé au deuxième composant (2).

9. Dispositif d'assemblage selon la revendication 7, sachant que l'ouverture (10) est réalisée sous forme de perçage borgne dans le premier composant (1) à assembler par serrage, et le boulon (3 °), au moyen de sa partie terminale opposée au deuxième composant (2), ou la vis de serrage (3**), au moyen de sa partie terminale opposée au deuxième composant (2), est disposé(e) fixement dans le premier composant (1), en particulier y est vissé(e).

10. Dispositif d'assemblage selon l'une des revendications 5 à 9, sachant que le boulon (3*) présente une partie dotée d'une surface conique en tant que cône extérieur (60*), comme élément de serrage conique (6*) complémentaire de l'élément de serrage conique (5*).

11. Dispositif d'assemblage selon l'une des revendications 5 à 10, sachant que tous les composants transmettant des forces radiales et axiales sont réalisés en un matériau métallique.

12. Dispositif d'assemblage selon l'une des revendications 5 à 11, sachant qu'il présente une pluralité de vis de blocage (7°°), sachant que les vis de blocage (7°°) sont disposées en étant réparties sur une périphérie de l'élément de serrage (5**) et, par des perçages filetés dans l'élément de serrage (5**), font saillie avec possibilité de déplacement en direction de la surface de butée (21) du deuxième composant (2).

13. Dispositif d'assemblage selon la revendication 12, sachant que les vis de blocage (7°°) sont disposées en étant réparties sur une périphérie d'une partie de tête (51°°) de l'élément de serrage (5°°).

14. Dispositif d'assemblage selon l'une des revendications 5 à 13, sachant qu'une rondelle plate (9°°) est placée entre l'écrou de blocage (7) et la surface de butée (21), ou est placée entre la vis de blocage au moins unique (7°°) et la surface de butée (21).

15. Dispositif d'assemblage selon l'une des revendications 5 à 14, sachant que l'élément de serrage conique (5**) doté du cône intérieur (50**) présente une première partie (51**) et une deuxième partie (53) sous la forme de deux composants séparés l'un de l'autre, sachant que l'écrou de blocage (7) ou la vis de blocage au moins unique (7°°) est vissé(e) sur la première partie (51**) et sachant que la deuxième partie (53) est réalisée conique et s'enfonce au moins dans le premier composant (1 ; 1°).
